# EUROPÄISCHE PATENTSCHRIFT

(11) **EP 3 165 804 B1**
(45) Veröffentlichungstag und Bekanntmachung des Hinweises auf die Patenterteilung: **29.11.2017**
(21) Anmeldenummer: 16192862.7
(22) Anmeldetag: 07.10.2016
(51) Int. Cl.: F16L 21/00, F16L 55/17

(54) **VERBINDUNG ZWEIER ROHRBRUCHDICHTSCHELLEN SOWIE DICHTUNGSANORDNUNG**
CONNECTION OF TWO PIPE BREAK SEAL RING AND SEALING ASSEMBLY
LIAISON DE DEUX COLLIERS D'ÉTANCHÉITÉ DE RUPTURE DE TUYAU ET SYSTÈME D'ÉTANCHÉITÉ

(30) Priorität: 04.11.2015 DE 102015118870
(43) Veröffentlichungstag der Anmeldung: 10.05.2017
(73) Patentinhaber: Keulahütte Lüneburg Armaturen GmbH, 21337 Lüneburg (DE)
(72) Erfinder:
(74) Vertreter: Griepenstroh, Jörg

(56) Entgegenhaltungen:
- FR-A1- 2 081 022
- US-A- 3 298 698
- US-A1- 2013 255 816

## Beschreibung

Die vorliegende Erfindung betrifft eine Dichtungsanordnung gemäß den Merkmalen im Oberbegriff von Patentanspruch 1.

Zur Versorgung von Gebäuden und Haushalten mit Medien wie beispielsweise Wasser oder Gas ist es aus dem Stand der Technik bekannt, Rohrleitungen insbesondere im Erdreich zu verlegen. Als Rohrleitungen kommen je nach Erstellungsjahr sowie Einsatzort und Einsatzzweck verschiedene Formen von Materialien zur Verwendung. Es gibt Rohrleitungen aus Gusseisen, Stahlwerkstoffen, aus Leichtmetallwerkstoffen, aber auch aus Kunststoff. Die Rohrleitungen haben ferner verschiedene Durchmesser von wenigen Millimetern bis hin zu 80 mm oder gar mehr als 200 mm Durchmesser. Oftmals werden solche Rohrleitungen auch mit der Bezeichnung DN80, DN100, DN150 oder DN200 benannt. Abhängig von dem verwendeten Werkstoff kann es jedoch sein, dass eine solche Rohrleitung mit der Bezeichnung DNxx nicht dem exakten Außendurchmesser der Rohrleitung entspricht, sondern +/- bis zu mehreren Millimetern hinzukommen aufgrund des verschiedenen Werkstoffes. Die nachfolgend beschriebene Erfindung ist bei allen Nennweiten von am Markt befindlichen Nenndurchmessern einsetzbar.

Durch Erdbewegungen, Bauarbeiten oder aber auch alterungsbedingten Verschleiß sowie gegebenenfalls Druckpulsationen des zu fördernden Mediums kann es zu Beschädigungen der Rohrleitungen kommen. Dabei kann eine Rohrleitung derart beschädigt werden, dass ein Riss oder eine Bruchstelle radial zumindest teilweise umlaufend orientiert auftritt. Oftmals treten jedoch gerade Beschädigungen in Form von Rissen oder Bruchstellen auf, die in Axialrichtung der Rohrleitung orientiert sind. Die beschädigte Stelle kann durch ein Messverfahren detektiert werden und das Erdreich wird in diesem Bereich ausgehoben und der entsprechende Abschnitt der Rohrleitung freigelegt.

Um diesen Abschnitt der Rohrleitung zumindest temporär zu reparieren, insbesondere abzudichten, sind aus dem Stand der Technik Rohrbruchdichtschellen bekannt. Beispielsweise aus der DE 84 29 896 U1 oder aber auch aus der DE 19 66 014 U oder der DE 75 19 851 U sind solche Rohrbruchdichtschellen, auch als Rohrdichtschelle bezeichnet, bekannt. Diese weisen einen außen liegenden Festkörper auf sowie einen darin angeordneten Dichtungskörper. Die Rohrbruchdichtschellen werden außenseitig auf die beschädigte Rohrleitung aufgesetzt. Entweder erfolgt dies in axialer Positionierung direkt an der beschädigten Stelle oder aber in Axialrichtung entfernt von der beschädigten Stelle. Die Festkörper werden dann außenseitig gekoppelt, beispielsweise werden mehrere Segmente miteinander verschraubt. Sofern sich die Rohrbruchdichtschelle direkt auf der beschädigten Stelle befindet, wird diese Verschraubung dann fest angezogen und der elastische Dichtungskörper dichtet die beschädigte Stelle ab. Im Falle der axialen Beabstandung zur Vormontage der Rohrbruchdichtschelle wird diese im Anschluss an die Vormontage in Axialrichtung verschoben, so dass die beschädigte Stelle der Rohrleitung übergriffen ist und im Anschluss daran wird die Rohrbruchdichtschelle durch Anziehen der Verschraubung fest montiert.

Gerade bei Beschädigungen oder Längsrissen, die sich in Axialrichtung orientieren, werden mitunter jedoch Rohrbruchdichtschellen benötigt, die länger sind als 20 cm, 30 cm oder gar 40 cm. Teilweise werden Rohrbruchdichtschellen benötigt, die in Axialrichtung länger sind als 80 cm, 90 cm oder 100 cm. Die die Rohrleitung reparierenden Firmen verwenden dabei Rohrbruchdichtschellen mit einer der Beschädigung entsprechenden axialen Länge. Gerade bei Rohrdurchmessern über 50 mm, insbesondere über 100 mm kann dies jedoch bedeuten, dass eine solche Rohrbruchdichtschelle mehr als 20 kg, insbesondere mehr als 30 kg oder gar mehr als 40 kg wiegt. Eine axiale Verschiebung einer mehr als 50 cm langen Rohrbruchdichtschelle ist aufgrund der Länge, Verschmutzungen auf der Außenseite der beschädigten Rohrleitung sowie des Eigengewichtes nur schwierig oder gar nicht möglich.

Aus der US 2013/255 816 A1 sind Reparaturschellen für eine Unterwasserpipeline bekannt. Die Reparaturschellen werden in Axialrichtung aneinander angeordnet und unter Eingliederung eines O-Ringes durch eine überlappende Klammer miteinander verbunden.

Weiterhin ist aus der FR 2 081 022 A1 eine Rohrverbindung zweier benachbarter Rohre bekannt, bei der unter Eingliederung eines durchgehenden Dichtungskörpers unter einer Dichtungsmanschette die beiden Rohre miteinander verbunden werden.

Aufgabe der vorliegenden Erfindung ist es daher, eine Möglichkeit aufzuzeigen, in einfacher und effektiver Weise beschädigte Rohrleitungen auch über größere axiale Abschnitte abzudichten.

Die zuvor genannte Aufgabe wird mit einer Dichtungsanordnung, aufweisend mindestens zwei Rohrbruchdichtschellen, gemäß den Merkmalen im Patentanspruch 1 gelöst.

Vorteilhafte Ausgestaltungsvarianten sind in den abhängigen Patentansprüchen beschrieben.

Die Dichtungsanordnung für eine Rohrleitung weist mindestens zwei Rohrbruchdichtschellen auf, wobei die Rohrbruchdichtschellen jeweils außenseitig die Rohrleitung umgreifend montierbar sind. Die Rohrbruchdichtschellen zeichnen sich durch einen außenliegenden Festkörper sowie darin angeordnete elastische Dichtungskörper aus. Die Dichtungsanordnung ist erfindungsgemäß dadurch gekennzeichnet, dass ein Dichtungskörper stirnseitig einen radial umlaufenden in Axialrichtung über den Festkörper überstehenden Fortsatz aufweist, wobei der andere Dichtungskörper stirnseitig eine radial umlaufende gegenüber einer Stirnseite des anderen Festkörpers zurückversetzte Ausnehmung aufweist, wobei der Fortsatz formschlüssig und fluiddicht in die Ausnehmung eingreift. Der Fortsatz und die Ausnehmung überlappen sich somit im Bereich des stirnseitigen Angrenzens bzw. Aneinanderliegens der zwei Rohrbruchdichtschellen.

Es ist somit erfindungsgemäß möglich, dass zunächst mehrere Rohrbruchdichtschellen durch ein reparierendes Unternehmen bevorratet werden. In Abhängigkeit der in Axialrichtung sich erstreckenden Länge der Beschädigung der Rohrleitung können dann zumindest zwei, bevorzugt aber auch mehrere, beispielsweise drei, vier oder fünf Rohrbruchdichtschellen in Axialrichtung in Reihe direkt hintereinander angeordnet werden. In den Übergangsbereichen, mithin zwischen den Stirnseiten zweier Rohrbruchdichtschellen, kommt es durch die erfindungsgemäße Überlappung der elastischen Dichtungskörper in Axialrichtung zu einer hinreichenden Abdichtung.

Es ist somit möglich, durch Rohrbruchdichtschellen, die beispielsweise eine axiale Erstreckung von 10 cm bis 30 cm aufweisen, diese leicht nach erfolgter Vormontage auf der Rohrleitung zu montieren und bei Bedarf axial zu verschieben. Muss jedoch eine gegenüber einer Rohrbruchdichtschelle längere Bruchstelle oder ein Riss in der Rohrleitung abgedichtet werden, so kann eine zweite Rohrbruchdichtschelle angesetzt werden oder aber vormontiert werden und in Axialrichtung an die bereits angesetzte Rohrbruchdichtschelle geschoben werden. Erfindungsgemäß werden Fortsatz und Ausnehmung der zwei Dichtungskörper überlappend angeordnet, so dass eine Abdichtung erfolgt. Hierzu sind insbesondere der Fortsatz und die Ausnehmung derart ausgebildet, dass eine Labyrinthdichtung ausgebildet wird. Durch die Montage, insbesondere ein Festziehen, wodurch eine Verringerung des Durchmessers der Rohrbruchdichtschelle auch an der Seite der Ausnehmung erfolgt, werden Ausnehmung und Fortsatz auf die Radialrichtung bezogen, jedoch auch zumindest teilweise in Axialrichtung, formschlüssig unter Spannung gebracht, so dass diese fluiddicht aneinander anliegen.

Die elastischen Dichtungskörper sind insbesondere aus einem gummiartigen Werkstoff bzw. einem Elastomerwerkstoff ausgebildet. Die Dichtungskörper sind insbesondere als Dichtungshülse bzw. Dichtungsmanschette einstückig und werkstoffeinheitlich ausgebildet. Bevorzugt weisen diese eine Trennfuge bzw.

Trennschlitz auf, so dass der Dichtungskörper seitlich auf die Rohrleitung zur Montage bzw. Vormontage aufgesetzt werden kann. Der aufgesetzte Dichtungskörper umgreift dann die Rohrleitung. Die Trennfuge durchtrennt den Dichtungskörper in Radialrichtung und erstreckt sich über die axiale Länge des Dichtungskörpers.

Der Festkörper selbst ist bevorzugt aus einem metallischen Werkstoff ausgebildet, insbesondere aus einem Gusswerkstoff. Bevorzugt ist der Festkörper radial umlaufend zweiteilig und ganz besonders bevorzugt dreiteilig ausgebildet mit einzelnen Segmenten. Die Segmente sind formschlüssig miteinander gekoppelt, insbesondere über Verschraubungen, wobei die Verschraubungen angezogen werden, insbesondere mit einem vorgegebenen Drehmoment. Hierdurch kann ein entsprechender Anpressdruck auf den in Radialrichtung unterhalb des Festkörpers befindlichen Dichtungskörper aufgebracht werden, der wiederum zu einer Abdichtung der Rohrleitung führt.

In besonders bevorzugter Ausgestaltungsvariante sind die Festkörper, insbesondere die Segmente des Festkörpers, mit dem Dichtungskörper gekoppelt. Beispielsweise können diese auf den Dichtungskörper aufgeklebt sein. Es ist jedoch auch möglich, dass die Segmente auf den Dichtungskörper aufvulkanisiert sind.

An einer sich in Axialrichtung erstreckenden Trennstelle von zwei Segmenten des radial umlaufenden Festkörpers ist ein Blechstreifen auf der Außenseite des Dichtungskörpers angeordnet, insbesondere einvulkanisiert oder in ausgeformten Bereichen eingeklebt, so dass bei Festziehen der Verschraubung sich der Dichtungskörper nicht radial nach außen ausdehnt und/oder zwischen zwei Segmenten eingeklemmt wird.

Alternativ oder ergänzend sind an den Segmenten zahnartige Fortsätze ausgebildet, wobei die zahnartigen Fortsätze zweier Segmente kammartig ineinandergreifen. Die zahnartigen Fortsätze haben dann eine Innenkontur, welche eine Fortsetzung des Innenradius des Segmentes ist. Durch die zahnartig ineinander kämmenden Fortsätze zweier Segmente wird ebenfalls ein radiales Ausdehnen des elastischen Dichtungskörpers bei Festziehen der Rohrbruchdichtschelle vermieden.

Besonders bevorzugt ist die Dichtungsanordnung als System ausgebildet, so dass eine Rohrbruchdichtschelle auf einer Seite stirnseitig den Fortsatz aufweist und auf der gegenüberliegenden Stirnseite der gleichen Rohrbruchdichtschelle die Ausnehmung. Es ist somit möglich, mehr als zwei, insbesondere mehr als drei, mithin beliebig viele Rohrbruchdichtschellen in Axialrichtung hintereinander auf der Rohrleitung anzuordnen. Somit kann einem jeweiligen Reparaturdienst durch die Bereitstellung entweder von Rohrbruchdichtschellen mit einheitlicher Gesamtlänge oder aber mehreren Rohrbruchdichtschellen in verschiedenen Längen die Möglichkeit gegeben werden, eine Beschädigung der Rohrleitung abzudichten, wobei eine entsprechend beschädigte Stelle in Axialrichtung länger ist als die längste in dem System vorhandene Rohrbruchdichtschelle. Bei einem Riss, beispielsweise von 50 cm Erstreckung in Axialrichtung der Rohrleitung, muss nicht eine für diesen Einsatzzweck vorgesehene Rohrbruchdichtschelle verwendet werden, die beispielsweise eine Länge in Axialrichtung von 60 cm aufweist. Es können beispielsweise drei Rohrbruchdichtschellen von 20 cm oder zwei Rohrbruchdichtschellen von 30 cm zur Abdichtung des Risses angesetzt und montiert werden.

Damit die Dichtungswirkung auch bei eventuell in der Praxis auftretender unzweckmäßiger Montage bestmöglich ausgebildet ist, sind bevorzugt zwischen dem Fortsatz und der Ausnehmung mindestens zwei Anlageflächen, auch als Dichtflächen bezeichnet, bevorzugt drei Anlageflächen ausgebildet. Die mindestens zwei Anlageflächen stehen in einem Winkel zueinander und verlaufen jeweils radial umlaufend, insbesondere weist der Winkel 90° auf. Insbesondere ist hier zumindest eine Anlagefläche in Radialrichtung orientiert verlaufend und eine zweite Anlagefläche in einem Winkel dazu verlaufend angeordnet, besonders bevorzugt ist die zweite Anlagefläche in Axialrichtung orientiert radial umlaufend zwischen Fortsatz und Ausnehmung ausgebildet. Eine dritte Anlagefläche kann wiederum in Radialrichtung orientiert radial umlaufend ausgebildet sein. Die axial orientierte Anlagefläche bietet dabei den Vorteil, dass bei Anziehen der Verschraubung des Festkörpers durch die damit einhergehende radiale Komprimierung eine Flächenpressung von Fortsatz und Ausnehmung ausgebildet wird. Dies hat aufgrund der Elastizität des Dichtungskörpers jedoch auch gleichsam die Wirkung, dass zumindest nicht nur die Flächenpressung erhöht wird, sondern auch eine Ausdehnung in Axialrichtung erzeugt wird. Durch die in Radialrichtung orientierte umlaufende Dichtfläche kommt es hier aufgrund der axialen Ausdehnung wiederum zu einer formschlüssigen fluiddichten Anlage.

Bevorzugt sind Ausnehmung und Fortsatz, auf die Radialrichtung bezogen, an dem jeweiligen Dichtungskörper innenliegend ausgebildet. Der Fortsatz liegt somit bevorzugt an dem Rohr an und erstreckt sich in Axialrichtung. Der Fortsatz und die Ausnehmung können jedoch auch, auf die Radialrichtung bezogen, mittig an bzw. in dem Dichtungskörper ausgebildet sein oder aber außenliegend.

Um die Dichtungswirkung weiter zu steigern, ist es besonders bevorzugt vorgesehen, dass in der axialen Anlagefläche zwischen Fortsatz und Ausnehmung mindestens eine formschlüssige Geometrie ausgebildet ist. Die formschlüssige Geometrie ist bevorzugt eine Erhebung, die korrespondierend in eine Einmuldung eingreift. Die Erhebung kann dabei eine an dem Fortsatz, auf die Radialrichtung bezogen, nach außen gerichtete Erhebung sein, die in eine Einmuldung der Ausnehmung formschlüssig eingreift.

Weiterhin besonders bevorzugt ist es vorgesehen, dass an der Stirnseite des Fortsatzes der Festkörper radial abschnittsweise umlaufend mindestens einen, bevorzugt zwei oder mehrere Überstände aufweist. An einer zweiten Rohrbruchdichtschelle ist an der Stirnseite der Ausnehmung ein Stufenabsatz ausgebildet. Der oder die Überstände der ersten Rohrbruchdichtschelle übergreifen dabei in Axialrichtung den Stufenabsatz der zweiten Rohrbruchdichtschelle. Hierdurch wird einem anwendenden Monteur die Möglichkeit gegeben, den korrekten Sitz der zwei in Axialrichtung hintereinander angeordneten Rohrbruchdichtschellen zu überprüfen. Übergreift der Überstand den Stufenabsatz zumindest abschnittsweise in Axialrichtung, so ist auch der Fortsatz des ersten Dichtungskörpers ordnungsgemäß in die Ausnehmung des zweiten Dichtungskörpers eingreifend angeordnet.

In einer weiteren möglichen Ausgestaltungsvariante kann auch eine formschlüssige Verbindung zweier in Axialrichtung hintereinander angeordneter Festkörper erfolgen, beispielsweise nach Art eines Nut- und Federsystems erfolgen.

Weitere Vorteile, Merkmale, Eigenschaften und Aspekte der vorliegenden Erfindung sind Gegenstand der nachfolgenden Beschreibung. Bevorzugte Ausgestaltungsvarianten werden in den schematischen Figuren dargestellt. Diese dienen dem einfachen Verständnis der Erfindung. Es zeigen:
- Figur 1a bis d: eine erfindungsgemäße Dichtungsanordnung, aufweisend zwei Rohrbruchdichtschellen in Axialrichtung direkt hintereinander in verschiedenen Ansichten und Detailansicht,
- Figur 2a bis d: die Rohrbruchdichtschellen gemäß Figur 1, jedoch in Axialrichtung voneinander entfernt angeordnet,
- Figur 3a bis d: eine alternative Ausgestaltungsvariante einer Dichtungsanordnung mit jeweils zweigeteilten Rohrbruchdichtschellen und
- Figur 4a bis d: die Dichtungsanordnung aus Figur 3 in Axialrichtung voneinander beabstandet.

In den Figuren werden für gleiche oder ähnliche Bauteile dieselben Bezugszeichen verwendet, auch wenn eine wiederholte Beschreibung aus Vereinfachungsgründen entfällt.

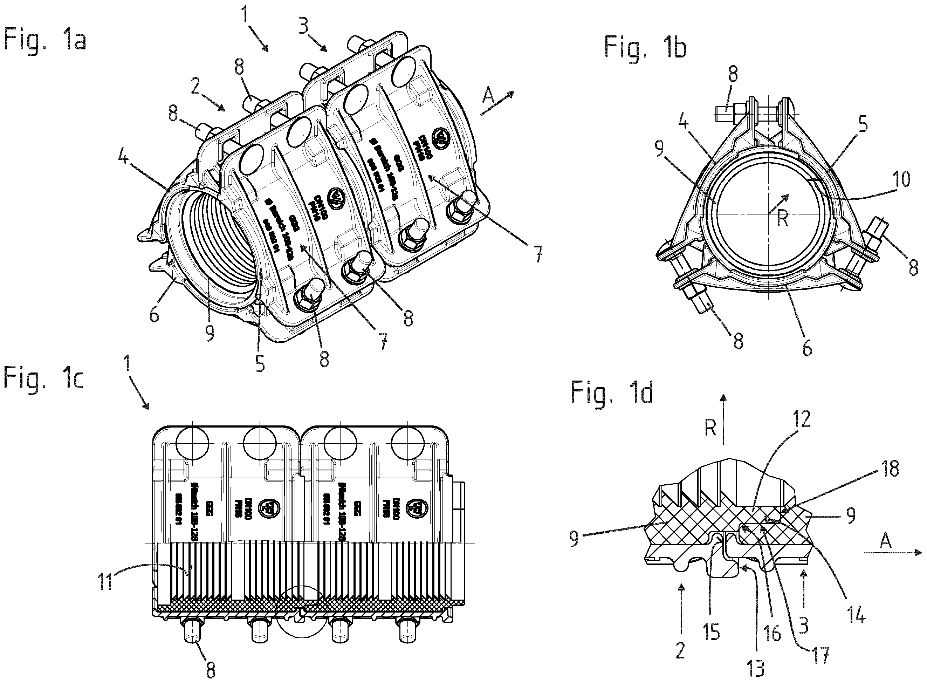

Figur 1a zeigt eine erfindungsgemäße Dichtungsanordnung 1, aufweisend eine erste Rohrbruchdichtschelle 2 und eine zweite Rohrbruchdichtschelle 3, welche in Axialrichtung A unmittelbar nebeneinander bzw. hintereinander angeordnet sind. Eine jede Rohrbruchdichtschelle 2, 3 weist einen radial umlaufenden, in drei Segmenten 4, 5, 6 aufgeteilten Festkörper 7 auf. Die einzelnen Segmente 4, 5, 6 sind über Schraubverbindungen 8 miteinander gekoppelt. Innenseitig ist ein elastischer Dichtungskörper 9 angeordnet. Der elastische Dichtungskörper 9 weist, gut zu erkennen in Figur 1b, welche eine Frontansicht zu Figur 1a darstellt, einen Trennschlitz 10 auf. Der Trennschlitz 10 verläuft nicht in Radialrichtung R, sondern in einem Winkel dazu. Der Trennschlitz 10 erstreckt sich über die axiale Länge des Dichtungskörpers 9. Die Dichtungskörper 9 weisen eine sägezahnförmige Innenkontur 11 auf, gut dargestellt in Teilschnittansicht gemäß Figur 1c.

Das erfindungsgemäße Detail der Dichtungsanordnung 1 ist vergrößert dargestellt in Figur 1d. Gut zu erkennen ist hier ein Fortsatz 12 des elastischen Dichtungskörpers 9 der ersten Rohrbruchdichtschelle 2, der in Axialrichtung A über eine Stirnseite 13 überstehend in eine Ausnehmung 14 in dem elastischen Dichtungskörper 9 der zweiten Rohrbruchdichtschelle 3 eingreift. Diese Ausnehmung 14 ist gegenüber einer Stirnseite 15 in Axialrichtung A zurückversetzt. Fortsatz 12 und Ausnehmung 14 sind in Radialrichtung innen an dem Dichtungskörper 9 ausgebildet.

Durch die Überlappung von Fortsatz 12 und Ausnehmung 14 wird eine Labyrinthdichtung, aufweisend drei umlaufende Dichtflächen 16, 17, 18 hergestellt. Eine erste radial umlaufende Dichtfläche 16 steht in einem 90° Winkel zu einer zweiten radial umlaufenden Dichtfläche 17, welche in Axialrichtung A orientiert ist, gefolgt wiederum von einer dritten radial umlaufenden Dichtfläche 18, welche in Radialrichtung R orientiert ist.

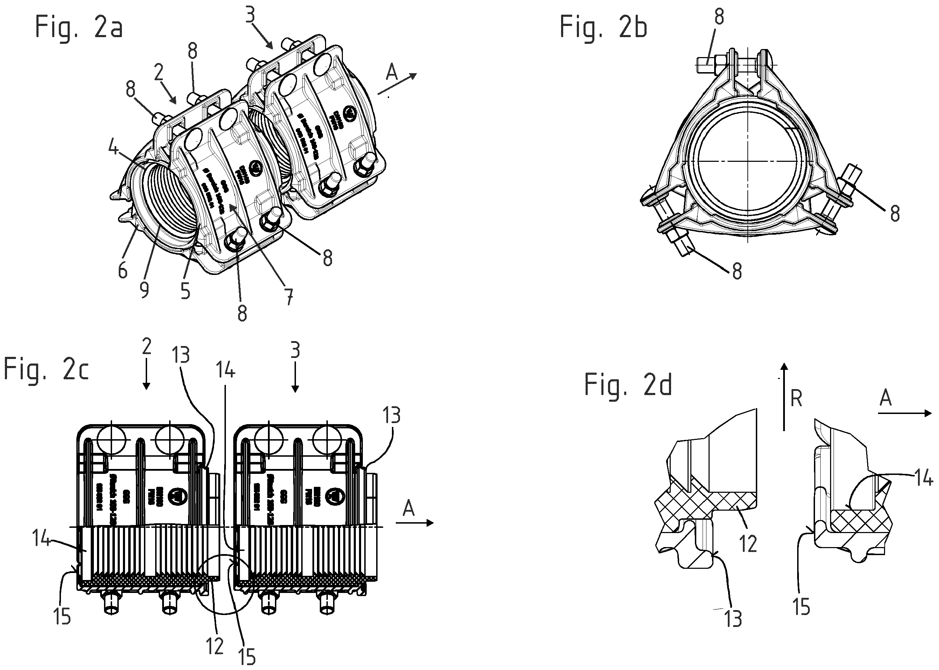

Dargestellt ist dies nochmals in Figur 2c und d. Hier sind die erste und die zweite Rohrbruchdichtschelle 2, 3 in Axialrichtung A voneinander beabstandet angeordnet. Gut zu erkennen in Figur 2c und 2d ist, dass der Fortsatz 12 über eine Stirnseite 13 in Axialrichtung A überstehend ausgebildet ist. Beide Rohrbruchdichtschellen 2, 3 sind gleich ausgebildet, so dass jede Rohrbruchdichtschelle 2, 3 auf die Bildebene bezogen auf einer rechten Stirnseite 13 über einen Fortsatz 12 verfügt und auf die Bildebene bezogen auf der linken Stirnseite 15 eine Ausnehmung 14 aufweist. Werden nunmehr diese Rohrbruchdichtschellen 2, 3 in Axialrichtung A verschoben, so kommt der Fortsatz 12 formschlüssig in der Ausnehmung 14 zur Anlage, wie in Fig. 1d dargestellt.

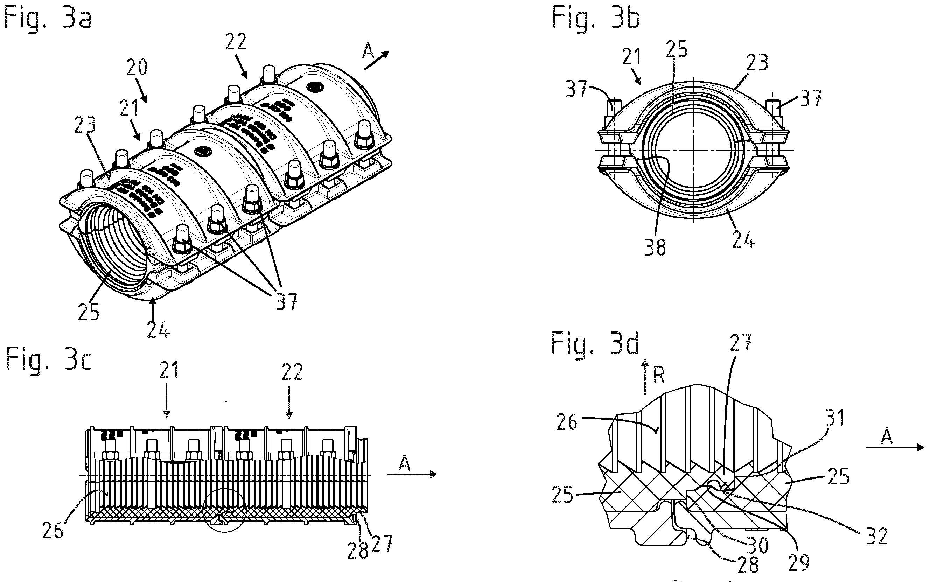

Figur 3a bis d zeigen eine weitere alternative Dichtungsanordnung 20, aufweisend wiederum eine erste Rohrbruchdichtschelle 21 sowie eine zweite Rohrbruchdichtschelle 22. Diese sind jedoch im Gegensatz zu der Ausgestaltungsvariante gemäß Figur 1 und 2 als jeweils radial umlaufend nur zweigeteilte Rohrbruchdichtschelle 21, 22, aufweisend ein erstes Segment 23 sowie ein zweites Segment 24, ausgebildet. Innenliegend ist wiederum ein elastischer Dichtungskörper 25 radial umlaufend angeordnet, welcher einen Trennschlitz 38 aufweist. Auch ist gemäß Figur 3c eine Innenmantelfläche 26 mit einer sägezahnförmigen Konfiguration ausgebildet. Erfindungsgemäß ist auch hier ein Fortsatz 27 ausgebildet, welcher gegenüber einer Stirnseite 28 übersteht und in eine Ausnehmung 29 in den Dichtungskörper 25 der zweiten Rohrbruchdichtschelle 22 formschlüssig eingreift. Auch hierbei ergeben sich drei als Labyrinthdichtung angeordnete Dichtflächen 30, 31, 32, wobei eine erste Dichtfläche 30 und eine dritte Dichtfläche 31 in Radialrichtung R orientiert ausgebildet sind und eine zweite Dichtfläche 32 in Axialrichtung orientiert verläuft. Alle Dichtflächen 30, 31, 32 sind radial umlaufend ausgebildet.

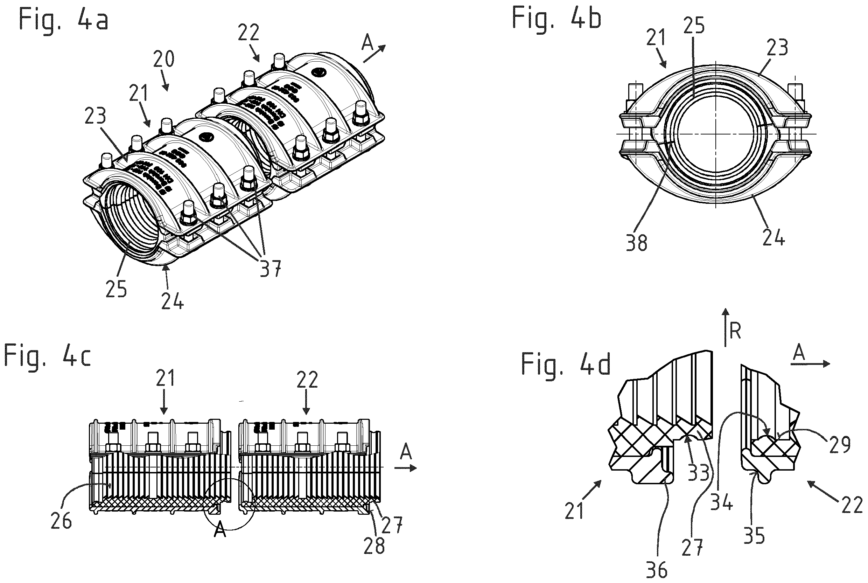

Gemäß Figur 4d ist hier jedoch erfindungsgemäß weiterhin vorgesehen, dass in der zweiten Dichtfläche 32 an dem Fortsatz 27 außenliegend eine Einmuldung 33 ausgebildet ist und in der Ausnehmung 29 eine Erhebung 34 ausgebildet ist. Einmuldung 33 und Erhebung 34 sind ebenfalls radial umlaufend ausgebildet. Hier kommt es zu einem zusätzlichen formschlüssigen Ineinandergreifen von Fortsatz 27 und Ausnehmung 29, so dass hierdurch die Druckbeständigkeit der fluiddichten Verbindung zwischen den zwei Rohrbruchdichtschellen 21, 22 weiter gesteigert werden kann. Dies kann auch bei der ersten Ausgestaltungsvariante realisiert werden. Ebenfalls sind die einzelnen Segmente 23, 24 der Rohrbruchdichtschellen 21, 22 über Schraubverbindungen 37 miteinander gekoppelt.

Ferner ist gemäß Figur 4d ein Stufenabsatz 35 an einer Rohrbruchdichtschelle 21, 22 ausgebildet, welcher von einem Überstand 36 der ersten Rohrbruchdichtschelle 21 in Axialrichtung A abschnittsweise formschlüssig übergriffen ist. Bevorzugt sind auch bei dieser Ausgestaltungsvariante alle Rohrbruchdichtschellen 21,22 zumindest an ihren stirnseitigen Enden gleich ausgebildet, so dass nicht nur zwei, sondern auch drei, vier oder mehr Rohrbruchdichtschellen 21, 22 in Axialrichtung A unmittelbar hintereinander angeordnet werden können und jeweils zwischen den Rohrbruchdichtschellen 21, 22 und hier insbesondere der elastischen Dichtungskörper 25 eine erfindungsgemäße Verbindung mit Überlappung der elastischen Dichtungskörper 25 ausgebildet ist.

### Bezugszeichen:

1 - Dichtungsanordnung
2 - erste Rohrbruchdichtschelle
3 - zweite Rohrbruchdichtschelle
4 - Segment
5 - Segment
6 - Segment
7 - Festkörper
8 - Schraubverbindung
9 - elastischer Dichtungskörper
10- Trennschlitz
11 - Innenkontur
12 - Fortsatz
13 - Stirnseite zu 2
14- Ausnehmung
15 - Stirnseite zu 3
16 - erste Dichtfläche
17 - zweite Dichtfläche
18 - dritte Dichtfläche
20 - Dichtungsanordnung
21 - erste Rohrbruchdichtschelle
22 - zweite Rohrbruchdichtschelle
23 - erstes Segment
24 - zweites Segment
25 - elastischer Dichtungskörper
26 - Innenmantelfläche
27 - Fortsatz
28 - Stirnseite
29 - Ausnehmung
30 - erste Dichtfläche
31 - dritte Dichtfläche
32 - zweite Dichtfläche
33 - Einmuldung
34 - Erhebung
35 - Stufenabsatz
36 - Überstand
37 - Schraubverbindung
38 - Trennschlitz zu 25
A - Axialrichtung
R - Radialrichtung

## Patentansprüche

1. Dichtungsanordnung für eine Rohrleitung aufweisend zwei Rohrbruchdichtschellen (2, 3; 21, 22), welche außenseitig die Rohrleitung umgreifend montierbar sind, und jeweils einen außenliegenden Festkörper (7) sowie darin angeordneten elastischen Dichtungskörper (9, 25) aufweisen, **dadurch gekennzeichnet, dass** ein Dichtungskörper (9, 25) stirnseitig einen radial umlaufenden über den Festkörper (7) in Axialrichtung (A) überstehenden Fortsatz (12, 27) aufweist, wobei der andere Dichtungskörper (9, 25) stirnseitig eine radial umlaufende, gegenüber dem Festkörper (7) in Axialrichtung (A) zurückversetzte Ausnehmung (14, 29) aufweist, wobei der Fortsatz (12, 27) formschlüssig und fluiddicht in die Ausnehmung (14, 29) eingreift.

2. Dichtungsanordnung nach Anspruch 1, **dadurch gekennzeichnet, dass** der Fortsatz (12, 27) und die Ausnehmung (14, 29) im gegenseitigen Eingriff eine Labyrinthdichtung ausbilden.

3. Dichtungsanordnung nach Anspruch 1 oder 2, **dadurch gekennzeichnet, dass** zwischen Fortsatz (12, 27) und Ausnehmung (14, 29) mindestens zwei Dichtflächen (16, 17, 18; 30, 31, 32) ausgebildet werden, die in einem Winkel zueinander angeordnet sind, insbesondere ist eine Dichtfläche (16, 17, 18) in Radialrichtung (R) orientiert und eine zweite Dichtfläche (30, 31, 32) in Axialrichtung (A) orientiert.

4. Dichtungsanordnung nach einem der Ansprüche 1 bis 3, **dadurch gekennzeichnet, dass** der Festkörper (7) radial umlaufend aus mindestens zwei Segmenten (4, 5), insbesondere drei Segmenten (4, 5, 6) ausgebildet ist, wobei die Segmente (4, 5, 6) bevorzugt miteinander verschraubt sind.

5. Dichtungsanordnung nach einem der Ansprüche 1 bis 4, **dadurch gekennzeichnet, dass** der Festkörper (7) oder die Segmente (4, 5, 6) aus metallischem Gusswerkstoff ausgebildet sind.

6. Dichtungsanordnung nach einem der Ansprüche 1 bis 5, **dadurch gekennzeichnet, dass** der Dichtungskörper (9,25) jeder Rohrbruchdichtschelle (2, 3; 21, 22) an einer Stirnseite (13, 15) einen Fortsatz (12, 27) und an der gegenüberliegenden Stirnseite (13, 15) eine Ausnehmung (14, 29) aufweist.

7. Dichtungsanordnung nach einem der Ansprüche 1 bis 6, **dadurch gekennzeichnet, dass** in einer axialen Dichtfläche (17,32) zwischen Fortsatz (12, 27) und Ausnehmung (14, 29) mindestens eine formschlüssige Geometrie ausgebildet ist, bevorzugt ist eine Erhebung (34) ausgebildet, die korrespondierend in eine Einmuldung (33) eingreift.

8. Dichtungsanordnung nach einem der Ansprüche 1 bis 7, **dadurch gekennzeichnet, dass** an einer Rohrbruchdichtschelle (2, 3; 21, 22) an der Stirnseite (13, 15, 28) des Fortsatzes (12, 27) der Festkörper (7) radial abschnittsweise umlaufend einen Überstand (36) aufweist und dass an einer zweiten Rohrbruchdichtschelle (3, 22) an der Stirnseite (13, 28) der Ausnehmung (14, 29) ein Stufenabsatz (35) ausgebildet ist, so dass bei Koppelung der Rohrbruchdichtschellen (2, 3; 21, 22) der Überstand (36) den Stufenabsatz (35) in Axialrichtung (A) übergreift.

## Claims

1. Seal arrangement for a pipe line comprising two pipe burst closing brackets (2, 3; 21, 22) which are mountable on the outside surrounding the pipe line and comprise an outer solid body (7) as well as elastic seal bodies (9, 25) arranged therein **characterised in that** a seal body (9, 25), on the front end, comprises a radially circumferential projection (12, 27) protruding over the solid body (7) in an axial direction (A) wherein the other seal body (9, 25) comprises, on the front end, a radially circumferential recess (14, 29) recessed with respect to the solid body (7) in the axial direction (A) wherein the projection (12, 27) engages in a positive-locking and fluid-tight manner into the recess (14, 29).

2. Seal arrangement according to claim 1, **characterised in that** the projection (12, 27) and the recess (14, 29) form a labyrinth seal in the opposing engagement.

3. Seal arrangement according to claim 1 or 2, **characterised in that** between projection (12, 27) and recess (14, 29) at least two seal surfaces (16, 17, 18; 30, 31, 32) are formed which are assigned to each other at an angle, in particular a seal surface (16, 17, 18) is oriented in the radial direction (R) and a second seal surface (30, 31, 32) is oriented in the axial direction (A).

4. Seal arrangement according to any one of claims 1 to 3, **characterised in that** the solid body (7) is configured in a radially circumferential manner from at least two segments (4, 5), in particular three segments (4, 5, 6) wherein the segments (4, 5, 6) are preferably screwed together.

5. Seal arrangement according to any one of claims 1 to 4, **characterised in that** the solid body (7) or the segments (4, 5, 6) are configured from metallic cast material.

6. Seal arrangement according to any one of claims 1 to 5, **characterised in that** the seal body (9, 25) of each pipe burst closing bracket (2, 3; 21, 22) comprises a projection (12, 27) on a front end (13, 15) and a recess (14, 29) on the opposing front end (13, 15).

7. Seal arrangement according to any one of claims 1 to 6, **characterised in that** at least one positive-locking geometry is configured in an axial seal surface (17, 32) between projection (12, 27) and recess (14, 29), a protrusion (34) is preferably configured which correspondingly engages into a depression (33).

8. Seal arrangement according to any one of claims 1 to 7, **characterised in that** the solid body (7) comprises an overhang (36) running radially in sections at a pipe burst closing bracket (2, 3; 21, 22) on the front end (13, 15, 28) of the projection (12, 27) and **in that** a stepped section (35) is configured at the second pipe burst closing bracket (3, 22) on the front end (13, 28) of the recess (14, 29) such that the overhang (36) overlaps the stepped section (35) in the axial direction (A) when coupling the pipe burst closing brackets (2, 3; 21, 22).

## Revendications

1. Agencement d'étanchéité pour une canalisation présentant deux colliers d'étanchéité pour rupture de tuyau (2, 3 ; 21, 22), qui peuvent être montés côté externe de manière à enserrer la canalisation et présentent respectivement un corps solide externe (7) ainsi que des corps d'étanchéité élastiques (9, 25) qui y sont agencés, **caractérisé en ce qu'**un corps d'étanchéité (9, 25) présente côté frontal un prolongement (12, 27) dépassant du corps solide (7) dans la direction axiale (A) de manière à l'entourer radialement, dans lequel l'autre corps d'étanchéité (9, 25) présente côté frontal une cavité (14, 29) reculée par rapport au corps solide (7) dans la direction axiale (A) de manière à l'entourer radialement, dans lequel le prolongement (12, 27) s'enclenche dans la cavité (14, 29) avec adaptation des formes et de manière étanche aux fluides.

2. Agencement d'étanchéité selon la revendication 1, **caractérisé en ce que** le prolongement (12, 27) et la cavité (14, 29) en engagement mutuel forment un joint à labyrinthe.

3. Agencement d'étanchéité selon la revendication 1 ou 2, **caractérisé en ce que** sont formées entre le prolongement (12, 27) et la cavité (14, 29) au moins deux surfaces d'étanchéité (16, 17, 18 ; 30, 31, 32) qui sont agencées en faisant un angle mutuel, en particulier une surface d'étanchéité (16, 17, 18) est orientée dans la direction radiale (R) et une seconde surface d'étanchéité (30, 31, 32) est orientée dans la direction axiale (A).

4. Agencement d'étanchéité selon l'une quelconque des revendications 1 à 3, **caractérisé en ce que** le corps solide (7) est formé d'au moins deux segments (4, 5), en particulier de trois segments (4, 5, 6), qui l'entourent radialement et dans lequel les segments (4, 5, 6) sont de préférence vissés les uns aux autres.

5. Agencement d'étanchéité selon l'une quelconque des revendications 1 à 4, **caractérisé en ce que** le corps solide (7) ou les segments (4, 5, 6) est ou sont formés d'un matériau métallique coulé.

6. Agencement d'étanchéité selon l'une quelconque des revendications 1 à 5, **caractérisé en ce que** le corps d'étanchéité (9, 25) de chaque collier d'étanchéité pour rupture de tuyau (2, 3 ; 21, 22) présente sur un côté frontal (13, 15) un prolongement (12, 27) et du côté opposé (13, 15) une cavité (14, 29).

7. Agencement d'étanchéité selon l'une quelconque des revendications 1 à 6, **caractérisé en ce qu'**est formée dans une surface d'étanchéité axiale (17, 32) entre le prolongement (12, 27) et la cavité (14, 29) au moins une géométrie à adaptation de formes, de préférence une protubérance (34) est formée qui s'engage de manière correspondante dans un creux (33).

8. Agencement d'étanchéité selon l'une quelconque des revendications 1 à 7, **caractérisé en ce que**, dans un collier d'étanchéité pour rupture de tuyau (2, 3 ; 21, 22) du côté frontal (13, 15, 28) du prolongement (12, 27), le corps solide (7) présente une saillie (36) l'entourant radialement par fractions et, dans un second collier d'étanchéité pour rupture de tuyau (3, 22) sur le côté frontal (13, 28) de la cavité (14, 29) est formé un épaulement étagé (35) de sorte que, lors du couplage des colliers d'étanchéité pour rupture de tuyau (2, 3 ; 21, 22), la saillie (36) chevauche l'épaulement étagé (35) dans la direction axiale (A).
